Europäisches Patentamt

European Patent Office

Office européen des brevets

(19)

(11) **EP 1 170 169 B1**

(12) **FASCICULE DE BREVET EUROPEEN**

(45) Date de publication et mention
de la délivrance du brevet:
**17.11.2004 Bulletin 2004/47**

(51) Int Cl.⁷: **B60N 2/52**

(21) Numéro de dépôt: **01401778.4**

(22) Date de dépôt: **03.07.2001**

(54) **Dispositif de suspension, notamment pour siège de véhicule**

Aufhängungseinrichtung, insbesondere für Fahrzeugsitze

Suspension device, in particular for a vehicle seat

(84) Etats contractants désignés:
**DE ES GB IT**

(30) Priorité: **07.07.2000 FR 0008914**

(43) Date de publication de la demande:
**09.01.2002 Bulletin 2002/02**

(73) Titulaire: **THOMSON MARCONI SONAR SAS**
**06903 Sophia Antipolis (FR)**

(72) Inventeurs:
• **Fradella, Max, Thales Intellectual Property**
**94117 Arcueil Cedex (FR)**

• **Sciortino, Serge, Thales Intellectual Property**
**94117 Arcueil Cedex (FR)**

(74) Mandataire: **Desperrier, Jean-Louis et al**
**Thales Intellectual Property,**
**13, avenue du Prés. Salvador Allende**
**94117 Arcueil Cédex (FR)**

(56) Documents cités:
**WO-A-96/03291**      **DE-C- 915 898**
**FR-A- 2 753 873**      **US-A- 4 351 556**
**US-A- 5 505 521**

**Description**

La présente invention se rapporte aux dispositifs de suspension qui permettent en particulier de fixer un siège dans un véhicule en permettant d'amortir les chocs subis par le châssis de ce véhicule. Elle permet également de fixer un tel siège dans un dispositif de simulation destiné à simuler les mouvements de ce siège, pour un simulateur de conduite par exemple.

On connaît du brevet français n° 98 14639, déposé le 20 novembre 1998 par la demanderesse et publié le 26 mai 2000 sous le n° 2 786 142 (correspondant au préambule de la revendication indépendante), un dispositif de suspension passive, pouvant être également converti en suspension active en lui rajoutant un moteur, électrodynamique par exemple. Ce dispositif comporte au moins deux lames horizontales flexibles formant avec deux plaques verticales rigides un parallélogramme déformable, permettant à un siège qui est fixé dessus d'effectuer un mouvement uniquement vertical sous l'effet des vibrations d'un châssis sur lequel ce dispositif est fixé. L'exemple de réalisation de ce dispositif décrit dans ce brevet est néanmoins assez peu réaliste et difficile à fabriquer. En effet la fixation au châssis d'une part, et au siège d'autre part, s'effectue à l'aide de pièces en forme de T dont la construction, et l'incorporation dans le dispositif, sont délicates à exécuter. Par ailleurs la fixation au siège s'effectue vers l'avant de celui-ci et la fixation au châssis vers le niveau de l'arrière du siège. Le porte-à-faux ainsi obtenu entraîne notamment des efforts de flexion, qui nuisent à la solidité de l'ensemble et peuvent provoquer des mouvements perturbatoires du siège par rapport au châssis.

Pour pallier ces inconvénients, l'invention propose un dispositif de suspension, notamment pour siège de véhicule, du type comportant un ensemble de lames flexibles formant avec deux supports un dispositif dans lequel l'un des supports peut se déplacer parallèlement à l'autre sous l'effet de la flexion desdites lames élastiques, caractérisé en ce que chacun de ces deux supports forme une pièce qui présente la forme d'un L et qui est assemblée tête-bêche avec l'autre pièce pour former une cage sensiblement parallélépipédique dont deux côtés sont sensiblement parallèles au plan desdites lames élastiques lorsque celles-ci sont au repos, ce qui permet de fixer le dispositif par l'une de ces pièces sur un châssis de fixation et de fixer sur l'autre pièce le siège à suspendre, et en ce que les deux pièces en forme de L sont en outre réunies par un ensemble de manchons élastiques dont les axes sont parallèles à l'axe desdites lames élastiques et qui sont situés à l'intérieur de la cage formée par les deux pièces en forme de L.

Selon une autre caractéristique, le dispositif comprend un moteur à réluctance variable situé à l'intérieur de la cage formée par les deux pièces en forme de L, ce moteur comportant une première pièce polaire en forme de U fixée sur l'une des pièces en forme de L, une deuxième pièce polaire complémentaire de la première pièce polaire et fixée sur l'autre pièce en forme de L, et au moins un bobinage fixé sur l'une des branches du U de la première pièce polaire; ces pièces polaires étant disposées pour que la force engendrée par le moteur électromagnétique soit perpendiculaire au plan des lames flexibles.

Selon une autre caractéristique, le dispositif comprend un capteur de déplacement du type optique comportant un tube disposé à l'intérieur de la cage sur l'une des pièces en forme de L et enfermant un émetteur-récepteur optique, et une tige disposée sur l'autre pièce en forme de L de manière à venir s'emboîter dans ledit tube et comportant à son extrémité des moyens réfléchissant permettant de relier optiquement l'émetteur et le récepteur enfermé dans le tube; l'axe de ce détecteur optique étant perpendiculaire au plan des lames flexibles,

Selon une autre caractéristique, le dispositif comprend des moyens pour mesurer le champ magnétique dans l'entrefer du moteur électromagnétique afin de déterminer de manière indirecte le déplacement des pièces en forme de L.

Selon une autre caractéristique, le dispositif comprend des moyens électroniques de commande et de régulation recevant l'information de distance entre les deux pièces en forme de L et alimentant le moteur électromagnétique.

D'autres particularités et avantages de l'invention apparaîtront clairement dans la description suivante, faite à titre d'exemple non limitatif en regard des figures annexées qui représentent :

- la figure 1, une vue en coupe longitudinale d'un dispositif selon l'invention; et
- la figure 2, une vue en coupe transversale de ce même dispositif prise sensiblement au niveau du centre de celui-ci,

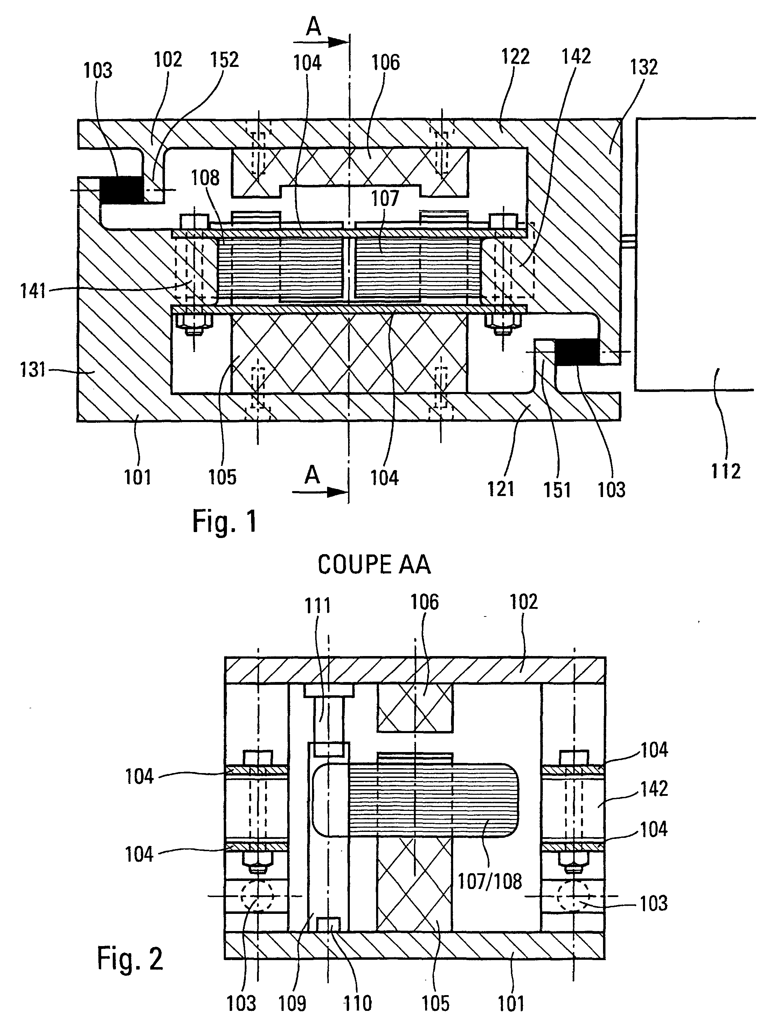

Le dispositif selon l'invention, représenté en coupe sur les figures 1 et 2 comporte une structure de base formée de deux pièces 101 et 102 sensiblement identiques reliées par un ensemble, de manchons élastiques 103, ici au nombre de 4. Ces pièces sont situées tête-bêche. Chacune de ces pièces a une structure en forme de L comportant un premier membre, respectivement 121 et 122, allongé et relativement mince, et un deuxième membre, respectivement 131 et 132, nettement plus court et plus épais que le premier.

Les premiers membres 121 et 122 comportent sur leur face intérieure, près de leur extrémité libre, des premiers épaulements 151 et 152 qui font saillie sur cette face intérieure.

En plaçant tête-bêche les deux pièces 101 et 102, on peut ainsi les réunir par des manchons élastiques en élastomère 103 qui viennent relier ces premiers épaulements 151 et 152 aux extrémités libres des deuxièmes membres 131 et 132. Ces manchons élastiques doivent être en nombre suffisant pour permettre de former avec les deux pièces 101 et 102 un ensemble ayant la forme d'une cage parallélépipèdique rectangle ouverte sur ses deux faces latérales et dont la structure est stable, hormis la déformation possible de ces manchons élastiques. Dans l'exemple décrit sur les figures 1 et 2, ces manchons sont aux nombres de 4, mais on pourrait en utiliser un plus grand nombre, voir éventuellement le limiter à trois.

De cette manière, la cage formée par cet ensemble en forme de parallèpipède rectangle peut être fixée par la face extérieure de l'un des premiers membres 121 ou 122 sur le châssis d'un véhicule. On peut alors fixer sur la face correspondante de l'autre membre un siège destiné à recevoir le conducteur ou le passager de ce véhicule. Ce mode de fixation est manifestement plus pratique et plus solide que celui décrit dans le brevet cité en référence ci-dessus.

De manière avantageuse, les manchons élastiques 103 seront constitués d'un ensemble de couches superposées constituées respectivement de manière alternée d'un élastomère et d'un métal. Ceci permet d'augmenter la résistance et le coefficient d'élasticité de ces manchons élastiques.

Les manchons 103 à eux seuls pourraient éventuellement former une fixation élastique entre les deux pièces 101 et 102, permettant au siège fixé sur l'une de ces pièces d'osciller par rapport au châssis sur laquelle est fixé l'ensemble. Toutefois les caractéristiques qui seraient alors nécessaires pour ces manchons seraient difficiles à obtenir.

Dans ces conditions, l'invention propose de relier entre elles les deux pièces 101 et 102 par l'intermédiaire d'un ensemble, de lames élastiques 104, ici au nombre de 4, elles-mêmes boulonnées sur des deuxièmes épaulements 141 et 142 ménagés respectivement sur les faces intérieures des deuxièmes membres 131 et 132. Ces deuxièmes épaulements sont situés sur ces faces sensiblement au milieu de celles-ci, de manière à se trouver en vis à vis l'un de l'autre dans l'intérieur de la cage obtenue par l'assemblage des pièces 101 et 102. Ceci permet de fixer les lames élastiques 104 parallèlement au plan des premiers membres 121 et 122.

Le débattement des 2 pièces 101 et 102 l'une par rapport à l'autre est ainsi limité à des mouvements sensiblement parallèles au plan des deuxièmes membres 131 et 132. Ces mouvements sont donc verticaux dans la position représentée sur la figure. Ce mouvement est sensiblement identique à celui obtenu dans le dispositif décrit dans le brevet cité ci-dessus.

Les lames de suspension élastiques 104 sont réalisées en un matériau à la fois résistant et élastique, tel que par exemple l'acier. Leur épaisseur est étudiée pour obtenir un facteur d'élasticité k. Compte tenu de la masse totale M de la partie mobile de ce dispositif, c'est à dire celle comprenant le siège et la personne assise sur celui-ci en prenant pour le poids de cette personne assise une valeur moyenne, la fréquence de résonance de l'ensemble est donné par la formule :

$$fr = \frac{1}{2\pi}\sqrt{\frac{k}{M}}.$$

Le facteur d'élasticité k qui est le paramètre sur lequel on peut le plus jouer sera choisi pour que la valeur de fr soit inférieure aux fréquences des vibrations auquel est soumis le siège en raison des mouvements du châssis supportant l'ensemble.

En tant que tel ce dispositif constitue donc une suspension passive à lames, robuste, à faible coût et facilement fabriquable et utilisable. Ce dispositif pourrait ainsi servir de suspension passive.

Toutefois l'invention propose en outre, pour obtenir une suspension active, de lui adjoindre un moteur électrodynamique constitué par exemple comme sur les figures par une première pièce polaire 105 en forme de U fixée sur la face interne de l'un des premiers membres, 121 sur la figure, et d'une deuxième pièce polaire 106 fixées sur la face interne de l'autre premier membre, 122 sur ces figure. Ces deux pièces polaires forment ainsi un circuit magnétique comportant un entrefer dont l'épaisseur est variable en fonction du rapprochement et de l'éloignement des deux pièces 101 et 102 entre elles.

Pour pouvoir actionner ce dispositif, le circuit magnétique à réluctance variable ainsi décrit est complété par des bobines électriques 107 et 108 qui sont enfilées sur les deux branches libres du U formé par la pièce polaire 105. En faisant alors varier le courant dans ces bobines on fait varier le champ dans l'entrefer du circuit magnétique et l'on provoque le rapprochement ou l'éloignement des deux pièces polaires entre elles.

Pour obtenir une suspension active on alimente les bobinages 107-108 à partir d'un boîtier électronique de commande et de régulation 112, selon une technique d'asservissement dont le principe est en lui-même bien connu. On pourrait par exemple, selon une variante de réalisation, utiliser le procédé décrit dans la demande de brevet français n° 96 11797 déposée par la demanderesse le 24,09,1996 et publié le 27.03.1998 sous le n° 2 753 873.

On rappelle que cette méthode consiste à mesurer le champ magnétique dans l'entrefer entre les deux pièces polaires du circuit magnétique, et à commander le courant électrique circulant dans les bobines 107 -108 en utilisant dans le boîtier électronique de commande un circuit décrit dans ce brevet.

Selon une réalisation préférée, l'invention propose d'utiliser la technique plus classique qui consiste à mesurer la distance entre les pièces 101 et 102, et donc ces déplacements entre les deux pièces 101 et 102, à l'aide d'un capteur composé des organes 109 à 111.

Selon une caractéristique additionnelle de l'invention, ces organes forment un capteur optique de déplacement. Pour cela, dans un tube 109 disposé perpendiculairement à la face interne du premier membre 121, on a disposé une source de lumière et un récepteur optique 110, qui seront avantageusement réalisés avec une diode laser et une photodiode. Le faisceau lumineux émis par la diode laser est réfléchi sur l'extrémité réfléchissante d'une tige 111 disposée perpendiculairement sur la face interne de l'autre premier membre 122, de manière à pénétrer dans le tube 109. Ainsi le système optique est protégé contre les éléments extérieurs, par exemple la lumière parasite et les dépôts de poussière.

Ce système permet, de manière connue, de mesurer à tout instant la distance entre l'émetteur/récepteur optique 110 et la face réfléchissante de la tige 111. Cette mesure est alors transmise au coffret de contrôle 112 pour être exploitée afin de commander le courant dans les bobines 107-108 pour obtenir le mouvement voulu entre les deux pièces 101 et 102.

Ce dispositif permet donc d'amortir de façon active les vibrations auxquelles est soumis le siège fixé sur le dispositif. Il permet dans un autre mode d'utilisation, lorsque le dispositif est fixé sur le châssis d'un simulateur de conduite automobile par exemple, de commander des mouvements du siège de manière à simuler l'effet des chocs provenant du déplacement simulé du véhicule.

**Revendications**

1. Dispositif de suspension, notamment pour siège de véhicule, du type comportant un ensemble de lames flexibles (104) formant avec deux supports un dispositif dans lequel l'un des supports peut se déplacer parallèlement à l'autre sous l'effet de la flexion desdites lames, élastiques (104), **caractérisé en ce que** chacun de ces deux supports forme une pièce qui présente la forme d'un L et qui est assemblée tête-bêche avec l'autre pièce pour former une cage sensiblement parallélépipédique dont deux côtés (121,122) sont sensiblement parallèles au plan desdites lames élastiques (104) lorsque celles-ci sont au repos, ce qui permet de fixer le dispositif par l'une de ces pièces sur un châssis de fixation et de fixer sur l'autre pièce le siège à suspendre, et **en ce que** les deux pièces en forme de L (101,102) sont en outre réunies par un ensemble de manchons élastiques (103) dont les axes sont parallèles à l'axe desdites lames élastiques (104) et qui sont situés à l'intérieur de la cage formée par les deux pièces en forme de L.

2. Dispositif selon la revendication 1, **caractérisé en ce qu'**il comprend un moteur à réluctance variable situé à l'intérieur de la cage formée par les deux pièces en forme de L, ce moteur comportant une première pièce polaire (105) en forme de U fixée sur l'une des pièces en forme de L, une deuxième pièce polaire (106) complémentaire de la première pièce polaire et fixée sur l'autre pièce en forme de L, et au moins un bobinage (107,108) fixé sur l'une des branches du U de la première pièce polaire; ces pièces polaires étant disposées pour que la force engendrée par le moteur électromagnétique soit perpendiculaire au plan des lames flexibles.

3. Dispositif selon l'une quelconque des revendications 1 et 2, **caractérisé en ce qu'**il comprend un capteur de déplacement du type optique comportant un tube (109) disposé à l'intérieur de la cage sur l'une des pièces en forme de L (101) et enfermant un émetteur-récepteur optique (110), et une tige (111) disposée sur l'autre pièce en forme de L (102) de manière à venir s'emboîter dans ledit tube et comportant à son extrémité des moyens réfléchissant permettant de relier optiquement l'émetteur et le récepteur (110) enfermé dans le tube; l'axe de ce détecteur optique étant perpendiculaire au plan des lames flexibles.

4. Dispositif selon l'une quelconque des revendications 2 et 3, **caractérisé en ce qu'**il comprend des moyens pour mesurer le champ magnétique dans l'entrefer du moteur électromagnétique afin de déterminer de manière indirecte le déplacement des pièces en forme de L.

5. Dispositif selon l'une quelconque des revendications 2 à 4, **caractérisé en ce qu'**il comprend des moyens électroniques de commande et de régulation (112) recevant l'information de distance entre les deux pièces en forme de L (101,102) et alimentant le moteur électromagnétique (105-108)

**Claims**

1. Suspension device, in particular for a vehicle seat, of the type comprising a set of flexible leaves (104) forming, together with two supports, a device in which one of the supports can move parallel to the other through the bending effect of the said elastic leaves (104), **characterized in that** each of these two supports forms a part which has the shape of an L and which is assembled top to bottom with the other part so as to form a substantially parallelepipedal cage, two sides (121, 122) of which are substantially parallel to the plane of the said elastic leaves (104) when these are at rest, thus making it possible to fasten the device by one of these parts onto a mounting chassis and to fasten the seat that is to be suspended onto the other part, and **in that** the two L-shaped parts (101, 102) are additionally joined together by a set of elastic sleeves (103) whose axes are parallel to the axis of the said elastic leaves (104), the elastic sleeves being situated inside the cage formed by the two L-shaped parts.

2. Device according to Claim 1, **characterized in that** it includes a variable reluctance motor situated inside the cage formed by the two L-shaped parts, this motor comprising a U-shaped first polar part (105) fastened onto one of the L-shaped parts, a second polar part (106) which is complementary to the first polar part and is fastened onto the other L-shaped part, and at least one winding (107, 108) fastened onto one of the branches of the U of the first polar part, these polar parts being arranged so that the force generated by the electromagnetic motor is perpendicular to the plane of the flexible leaves.

3. Device according to either one of Claims 1 and 2, **characterized in that** it includes a displacement sensor of the optical type comprising a tube (109) which is arranged inside the cage on one of the L-shaped parts (101) and which encloses an optical emitter-receiver (110), and a rod (111) which is arranged on the other L-shaped part (102) so as to fit into the said tube and which comprises, at its end, reflecting means allowing optical connection between the emitter and the receiver (110) enclosed in the tube, the axis of this optical detector being perpendicular to the plane of the flexible leaves.

4. Device according to either one of Claims 2 and 3, **characterized in that** it includes means for measuring the magnetic field in the air gap of the electromagnetic motor in order to indirectly determine the displacement of the L-shaped parts.

5. Device according to any one of Claims 2 to 4, **characterized in that** it includes electronic control and regulating means (112) which receive information on the distance between the two L-shaped parts (101, 102) and supply the electromagnetic motor (105-108).

**Patentansprüche**

1. Aufhängungseinrichtung, insbesondere für Fahrzeugsitz jener Art, die eine Anordnung aus flexiblen Blättern (104) enthält, die mit zwei Stützen eine Einrichtung bilden, in der sich eine der Stützen unter der Wirkung der Biegung der elastischen Blätter (104) parallel zur anderen verschieben kann, **dadurch gekennzeichnet, dass** jede dieser beiden Stützen ein Teil bildet, das die Form eines L aufweist und das Kopf bei Fuß mit dem anderen Teil zusammengefügt ist, um einen im Wesentlichen parallelepipedischen Käfig zu bilden, dessen beiden Seiten (121, 122) im Wesentlichen parallel zur Ebene der elastischen Blätter (104) verlaufen, wenn diese sich in Ruhestellung befinden, wodurch die Befestigung der Einrichtung durch eines dieser Teile an einem Befestigungsgestell und die Befestigung am anderen Teil des aufzuhängenden Sitzes gestattet wird, und dass die beiden L-förmigen Teile (101, 102) des Weiteren durch eine Anordnung aus elastischen Buchsen (103) zusammengefügt sind, deren Achsen parallel zur Achse der elastischen Blätter (104) verlaufen und die sich im Inneren des durch die beiden L-förmigen Teile gebildeten Käfigs befinden.

2. Einrichtung nach Anspruch 1, **dadurch gekennzeichnet, dass** sie einen Motor mit veränderlicher Reluktanz umfasst, der sich im Inneren des durch die beiden L-förmigen Teile gebildeten Käfigs befindet, wobei dieser Motor ein U-förmiges erstes Polstück (105), das an einem der L-förmigen Teile befestigt ist, ein zum ersten Polstück komplementäres zweites Polstück (106), das am anderen L-förmigen Teil befestigt ist, und mindestens eine Spule (107, 108) aufweist, die an einem der Schenkel des U des ersten Polstücks befestigt ist; wobei diese Polstücke so angeordnet sind, dass die durch den Elektromotor erzeugte Kraft senkrecht zur Ebene der flexiblen Blätter verläuft.

3. Einrichtung nach Anspruch 1 oder 2, **dadurch gekennzeichnet, dass** sie einen optischen Wegmesssensor, der ein im Inneren des Käfigs an einem der L-förmigen Teile (101) angeordnetes Rohr (109) aufweist, das einen optischen Sender-Empfänger (110) enthält, und eine Stange (111) umfasst, die so am anderen L-förmigen Teil (102) angeordnet ist, dass sie in das Rohr eingreift, und an ihrem Ende Reflexionsmittel aufweist, die eine optische Verbindung des im Rohr enthaltenen Senders und Empfängers (110) gestatten; wobei sich dieser optische Detektor senkrecht zur Ebene der flexiblen Blätter erstreckt.

4. Vorrichtung nach Anspruch 2 oder 3, **dadurch gekennzeichnet, dass** sie Mittel zur Messung des magnetischen Felds im Luftspalt des Elektromotors umfasst, um indirekt die Bewegung der L-förmigen Teile zu ermitteln.

5. Einrichtung nach einem der Ansprüche 2 bis 4, **dadurch gekennzeichnet, dass** sie elektronische Steuer- und Regelmittel (112) umfasst, die die Information über den Abstand zwischen den beiden L-förmigen Teilen (101, 102) empfangen und den Elektromotor (105-108) speisen.

103 102 152 A 104 106 122 142 132

108

107

141

131

101 105 A 104 121 151 103 112

**Fig. 1**

COUPE AA

111 106 102

104

104

142

104

107/108

103

**Fig. 2**

103 109 110 105 101